(19) **Europäisches Patentamt**

**European Patent Office**

**Office européen des brevets**

(11) **EP 1 191 312 A2**

(12) **EUROPEAN PATENT APPLICATION**

(43) Date of publication:
27.03.2002 Bulletin 2002/13

(51) Int Cl.$^7$: **G01F 3/22**, B01L 3/02,
G01N 35/10, G06F 19/00

(21) Application number: **01121802.1**

(22) Date of filing: **11.09.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **21.09.2000 US 234132 P**<br><br>(71) Applicant: **Tecan Trading AG**<br>**8708 Männedorf (CH)** | (72) Inventors:<br>• **Vessey, Andrew R.**<br>**City of Raleigh, North Carolina (US)**<br>• **Porter, Gregory L.**<br>**Carrboro, North Carolina (US)**<br>• **Siesel, Peter T.**<br>**Briarcliff Manor, North Carolina (US)**<br><br>(74) Representative: **OK pat AG**<br>**Chamerstrasse 50**<br>**6300 Zug (CH)** |

(54) **System and method for optimization of parameters of liquid-handling instruments**

(57)     A system and method for optimizing liquid-handling parameters for liquid-handling instruments based on automated use of Design of Experiments principles. An automated factor screening experiment generates a fractional factorial design, creates a set of liquid classes, directs a pipetting control program to execute a worklist of pipetting commands, and performs an effects analysis to determine the factors affecting pipetting precision. An automated response surface methodology experiment based on a central composite experimental design is used to determine the optimal level of factors affecting precision of pipetting. An automated range-finding experiment determines the useful volume range of the liquid class so developed. An automated accuracy calibration experiment generates a calibration coefficient for the liquid class. An automated liquid class verification experiment then evaluates the precision and accuracy of the liquid class.

Screening Experiment

FIG. 3

## Description

The present patent application claims priority of a previously filed, copending provisional US patent application entitled " SYSTEM AND METHOD FOR LIQUID HANDLING PARAMETERS OPTIMIZATION ", filed September 21, 2000 as U.S. Patent Application Serial No. 60/234,132

## Background Of the Invention

The present invention is generally related to liquid handling equipment. More particularly, the present invention relates to a method and system for evaluating and optimizing liquid-handling parameters for a liquid class.

Liquid-handling equipment has always been important to biomedical research and life science applications. Pipettes need to be accurate and resist contamination, but still work quickly and efficiently in repetitive procedures. Although pipettes remain a key component of experimental protocols, new types of large-scale research require more automation and miniaturization in liquid handling capabilities.

The Human Genome Project and combinatorial chemistry experiments are sending new chemical compounds into the drug discovery and development pipeline. There is an increasing need to handle larger numbers of compounds dissolved in liquids and a diversity of assays to adequately measure them.

Pharmaceutical firms need to be able to accelerate the screening of chemical compounds for potential drug activity, such as enzyme-inhibition or receptor binding. The liquid-handling needs of pharmaceutical companies include diluting and moving test samples from plate to plate. Small amounts of samples need to be transferred to secondary plates that contain as little as one µl or less of liquid, and then conduct biochemical assays. The trend in drug discovery research is to screen compounds using 384-well plates.

Pipettes have evolved to diverse devices that may be electronic, multichannel, automated or robotic. They are typically slender and light, have thermal insulation, preset volumes, built-in tip ejectors, and mechanisms to program the devices to repeatedly deliver the same volume. Robotic systems perform the highly repetitive task of liquid handling and can be programmed to pipette, dilute, dispense, heat, cool, wash plates, and transfer liquids. Robotic systems also provide an audit trail, tracking and recording every step of the process. One of the most important benefits of automated liquid-handling is the precision and reproducibility of assays.

The automated liquid-handling equipment today can be better utilized by applying Design of Experiments (DOE) techniques. DOE is a statistical framework that can be used for the design and analysis of comparative experiments. DOE methods allow a researcher to create an optimal experiment based on the number of factors and the goals of the experiment. Experiments can be designed to gather information with the fewest possible number of "runs" to obtain the desired level of data. The two main types of experimental designs are screening designs and response surface designs. A screening design is one in which relatively few experimental runs are used to efficiently study a large number of experimental factors to screen out those few that are most active from the remainder that are relatively inactive over the ranges being considered. Response Surface Methodology (RSM) is an experimental technique to find the optimal response with the specified ranges of the factors. RSM designs assist in quantifying the relationships between one or more measured responses and the vital input facts.

The full and fractional factorials are types of screening designs. These are experiments in which many factors are considered with the purpose of identifying those factors, if any, that have large effects on the result being studied. Full factorials contain all possible combinations of a set of factors and are used to estimate the effects of all interactions. Fractional factorials are used to screen many factors to find a few that are significant. An experimental design including a subset of all possible combinations of factor levels causes some of the effects to be aliased. The successful use of fractional factorial designs is based on three key concepts: (1) the sparsity-of-effect principle; (2) the projection property; (3) sequential experimentation. The sparsity-of-effect principle is that when there are several variables, the system or process is likely to be driven primarily by some of the main effects and low-order interactions. Fractional factorial designs can be projected into stronger (larger) designs and the subset of significant factors. It is also possible to combine the runs of two or more fractional factorials to assemble sequentially a larger design to estimate the factor effects and interactions with interest.

As noted, RSM designs assist in quantifying the relationships between measured responses and the vital input factors. A two-level factorial screening design may be appropriate for five or more factors. RSM designs are capable of fitting a second order prediction equation for the response. The quadratic term in these equations model the curvature in the true response function. If a maximum or minimum response exists inside the factor region, a response surface model can pinpoint it.

The central composite is a design for response surface methods that is composed of a core two-level factorial plus axial points and center points. It is widely used for fitting a second-order response surface. The factorial points can be divided in such a way that the blocked effect is eliminated before computation of the model. The first one or more blocks consists of the factorial design with some center points. The remaining block consists of the star points with additional center points. The central composite design is simple and flexible, requires fewer treatment combinations than 3n factorials to estimate quadratic response surface equations, provides blocking options for the designs, and is a very efficient design in situations that call for a non-sequential batch response surface experiment.

Although DOE is widely accepted in manufacturing and process control today, it is not widely used in laboratory research.

## DEFINITIONS AND ACRONYMS

Accuracy - In liquid handling, the measurement of variance in the amount of liquid that an instrument was instructed to pipette and the volume of liquid that was actually pipetted.

Balanced Design - Designs in which the high and low levels of factors and interactions are present in equal numbers.

Block(ing) - Group of trials based on a common factor. Blocking is advantageous when there is a known factor that may influence the experimental result, but the effect is not of interest.

Confounding - Factor or factor interaction is confounded (or aliased) with another factor or faction interaction when the individual effects of the factors or factor interactions cannot be separated from each other because of the limitations of the experimental data. In a complete or full factorial design, there is no confounding.

DOE -Design of Experiments.

Liquid class - Parameters for pipetting control software to define the pipetting of a specific liquid.

One Factor at a Time (OFAT) - Traditional method of varying only one factor per experiment. The disadvantages of OFAT are that a large number of experimental runs are required and no interaction information is provided.

Precision - In liquid handling, the measurement of variance between pipetting replications with a given liquid, volume and set of parameters.

Resolution - Degree of confounding present in a design. Design resolution refers to the separate identification of factor effects and interactions that the design supports. This is only relevant for multifactor, not OFAT, experiments. Design resolution is usually expressed as Resolution III, IV, V with the higher resolution designs being labeled with the larger roman numerals.

RoMa - The Robotic Manipulator arm that is available on some liquid-handling robotic instruments.

Worklist - File containing pipetting commands that are used by the pipetting control software.

## Summary of the Invention

The present invention provides an automated method of optimizing and evaluating liquid class parameters for liquid-handling based on the principles of Design of Experiments. The invention provides a methodology to execute, gather and document the designs, experimental data and resulting conclusions produced during the development of a liquid class. All control and interfacing with liquid-handling instruments and devices is provided by external pipetting control software packages. The instruments supported by the present invention are dependent upon those external pipetting control software packages and the hardware support they provide. The present invention is dependent on features of a pipetting software package for control of a robotic instrument. The software for optimizing and evaluating liquid class parameters of the present invention requires a computer platform with performance equivalent to or greater than that of a Pentium II 266 MHz processor with 128 Megabytes (MB) of random access memory (RAM). Target operating systems are Microsoft Windows NT 4.0 and Microsoft Windows 2000. The software itself is produced using the Borland C++ Builder, Borland Delphi and Microsoft Visual C++ development tools. The liquid-handling optimization software includes ten modules designed to aid in the development and evaluation of the liquid classes used by the liquid-handling instruments pipetting control software package. Although the terminology liquid classes is used herein, there are other terms used by manufacturers of liquid-handling products to refer to the set of parameters for pipetting control software to define the pipetting of a specific liquid, e.g. performance profiles.

The Factor Screening module generates a liquid handling robotic instrument worklist, implementing a two-level factorial experiment. This experiment is designed to identify the factors that influence the pipetting precision of a liquid under study. The configuration of the instrument to be used is automatically loaded from the configuration file of the active data directory for the liquid-handling instruments software package. The Screening Data Evaluation module accepts as input the experimental design and result data from an experiment generated by the Factor Screening module. An option for the Screening Data Evaluation module is provided to allow automated initiation by the liquid handling instruments pipetting control software package once a pipetting experiment is complete. The Screening Data Evaluation module calculates and reports the estimated effects and interactions of each of the factors employed in the experiment.

The Response Surface Design module accepts input from the Screening Data Evaluation module or from a user interface that allows the user to arbitrarily select factors to optimize. The Response Surface Design module generates a standard worklist designed to conduct an experiment to optimize the factors previously found to influence pipetting precision. The Response Surface Evaluation module accepts as input the design of, and data from, an experiment generated by the Response Surface Design module. A driver for the Response Surface Evaluation module enables automated initiation by the liquid-handling instruments pipetting control software package one a pipetting experiment is complete. The Response Surface Evaluation module calculates and reports the optimal levels of each of the factors in the experiment.

The Range-Finding Design module accepts input from the Optimization Evaluation module or from a user interface that allows the user to arbitrarily select the "optimal" condition around which to optimize. The Range-Finding Design module generates a standard worklist to conduct an experiment designed to determine the optimization around the volume used in previous optimizations. The Range-Finding Evaluation module accepts as input the design of and data from an experiment generated by the Range-Finding Design module. A driver for the Range-Finding Evaluation module enables automated initiation by the liquid-handling instruments pipetting control software package once a pipetting experiment is complete. The Range-Finding Evaluation module calculates and reports the precision for each measured point, and whether each meets the user-defined criteria for adequate precision.

The Accuracy Calibration module provides for calibration of either or both single and multi-pipetting. It takes as input the calibration data for the type of detection being used. This data might take the form of pre-measured extinction coefficient data or instructions for acquiring that data, e.g., from plates placed on the pipetting deck. A second required input is the liquid class to be tested. The Accuracy Calibration module generates a standard worklist designed to generate a calibration coefficient for the liquid class under study. The Calibration module accepts as input the parameters and data from the Accuracy Calibration module directed experiment in a standard format. The Calibration module generates the calibration coefficient and adjustment volume for the liquid class under study from the experimental data and input parameters from the Accuracy Calibration module.

The final Liquid Class Verification module takes as input an existing liquid class, which may be a master liquid class containing multiple volume ranges. The user can specify all or some of these volume ranges to test and whether or not both single and multi-pipetting should be tested. The final Liquid Class Verification module generates a worklist designed to test the precision and accuracy of a liquid class. Since only a single set of conditions is tested, a large number of applicable samples are used as the default. The final Liquid Class Evaluation module accepts as data the parameters from the final Liquid Class Verification module and data from the resulting pipetting experiment. The final Liquid Class Verification module evaluates all volume ranges of a liquid class in either single or multi-pipetting mode in a singe automated run. The final liquid class evaluation module evaluates the precision and accuracy of the liquid class based on the experimental design and data provided from the final Liquid Class Verification module.

## Detailed Description of the Drawings

The invention is better understood by reading the following detailed description in conjunction with the accompanying drawings wherein:

Fig. 1    illustrates an exemplary response surface for two independent variables using response surface methodology.
Fig. 2    illustrates software modules of the liquid class parameters optimization and evaluation software in accordance with an exemplary embodiment of the present invention.
Fig. 3    illustrates the processing logic for a screening experiment in accordance with an exemplary embodiment of the present invention.
Fig. 4    illustrates the processing logic for a response surface methodology experiment in accordance with an exemplary embodiment of the present invention.
Fig. 5    illustrates the processing logic for a range-finding experiment in accordance with an exemplary embodiment of the present invention.
Fig. 6    illustrates the processing logic for an accuracy calibration experiment in accordance with an exemplary embodiment of the present invention.
Fig. 7    illustrates the processing logic for a liquid class verification experiment in accordance with an exemplary embodiment of the present invention.

## Detailed Description of the Invention

The present invention uses the concept of a "liquid class" to arrange and describe the parameters needed for the accurate pipetting of a type of liquid using liquid-handling instruments, such as the Genesis and MiniPrep liquid-handling instrument series available from TECAN, US, Inc. Each type of liquid that is used in an instrument requires a corresponding liquid class to ensure accurate pipetting of that liquid. The pipetting control software comes with a default set of liquid classes already defined for the following liquid types: dimethylsulfoxide (DMSO), ethanol, serum, water, water on liquid level, micro DMSO, micro priming liquid and micro water (the last three liquid types are used only if the instrument has the required nanopipetting hardware).

Each liquid class has more than thirty parameters that can be altered by the user. The task of finding the optimum combination of parameters for a particular liquid is extremely time-consuming and often prone to error. There are two results that are sought by this process. The precision of the pipetting is the first result that is analyzed. Once the precision has been optimized, the liquid class factors can be optimized to perfect the accuracy of the pipetting. With the present invention a new method for automating this process has been established using statistical Design of Experiment methodologies and liquid-handling instrumentation technologies.

The first step in the inventive process of creating and/or optimizing a liquid class is the determination of which of the liquid class parameters are important to pipetting precision for the liquid under study. This varies greatly depending on the type of liquid, the volume of the liquid being aspirated or dispensed, and the configuration of the instrument doing the pipetting. To perform this step, an experiment using a two-level fractional factorial screening design is used.

A screening design is one in which relatively few experimental runs are used to efficiently study a large number of experimental factors to "screen out" those few that are most active from the remainder that are relatively inactive over the ranges being considered. Such designs are very useful in the early stages of sequential experimentation in order to conserve resources and identify the most influential experimentation factors for more detailed study. The objective of the screening design is "problem reduction".

Factorial designs are a variety of screening designs. These are experiments in which many variables are considered with the purpose of identifying those factors that have large effects on the result or process being studied. Full and fractional designs usually set each factor to only two levels, represented by a plus sign (+) and a negative sign (-).

Full factorials contain all possible combinations of a set of factors and thus are used to estimate the effects of all interactions. For n variables, the two-level full factorial design requires 2n data points. An example of the data that can be gained from a two level, 7-factor full factorial design is seen in Table 1.

TABLE 1

| Average | Main effects | Interactions | | | | | |
|---|---|---|---|---|---|---|---|
| | | 2-factor | 3-factor | 4-factor | 5-factor | 6-factor | 7-factor |
| 1 | 7 | 21 | 35 | 35 | 21 | 7 | 1 |

Fractional factorials take advantage of the fact that high order interactions in factorial designs (of many factors) tend to have negligible effect. Because these interactions have very little effect, they can thus be properly disregarded. There are several different fractional versions of full factorials available. These include the ½, ⎕, 1/8, 1/16, 1/32, 1/64 factorials. The choice on which of these to use is generally based on the number of factors to be studied and the desired accuracy of the results.

A fractional experiment design including only a subset of all possible combinations of factor levels causes some of the effects to be aliased and thus some interactions to be hidden. For example, if an experiment involves 10 factors then the loss of resolution involved in using, for example, a 1/16 factorial may be a reasonable trade off if it means that only 64 observations need to be made rather than 1024.

The fractional factorial design is used to generate a set of liquid classes that include the different settings at the levels and combinations dictated by the design. These liquid classes are used in pipetting a test volume to a microplate or series of microplates or a precision balance. The raw results from reading these plates in the appropriate fluorescence or absorbance reader or from utilizing the balance are used to determine the main effects and interaction effects of each of the parameters in question.

An assumption can be made that relatively few parameters are important in any particular liquid class. This is based on the "Sparsity-of-Effect Principle". When there are several variables, the system or process is likely to be driven primarily by some of the main effects and low-order interactions. A common rule-of-thumb is that 20% of the main effects and two-factor interactions are significant.

The main effect of each individual parameter (or factor) is determined by taking the difference between the two averages of the results at each level. The formula for this is as follows:

$$maineffect = \bar{y}_+ - \bar{y}_-$$

where $\bar{y}_+$ is the average of the result or response variable when the variable for which the effect is being calculated is set to its high (+) level and $\bar{y}_-$ is the average of the result when the variable is set to its low (-) level.

To calculate the effects of factor interactions a different formula is used. For example, for a two-factor interaction with the factors labeled A and B:

$$A * B \ interaction = \frac{(\bar{y}_{A+} - \bar{y}_{A-})_{B+} - (\bar{y}_{A+} - \bar{y}_{A-})_{B-}}{2}$$

In other words, the A * B interaction is calculated by taking the difference of the main effect of factor A with factor B set high (+) and the main effect of factor A with factor B set low (-) and dividing by 2.

Screening experiments are usually performed early in a response surface study when it is likely that many of the factors initially considered have little or no effect on the response. The factors that are identified as important in the screening experiment are then investigated more thoroughly through subsequent response surface designs.

Response Surface Methodology (RSM) is a technique designed to find the optimal response within the specified ranges of a small set of factors. RSM designs assist in quantifying the relationships between one or more measured responses and the vital input factors. A screening design is performed first to determine the factors to be used in the response surface design. The screening experiment is sometimes referred to as "phase zero" of the response surface study.

In "phase one" of the response surface study, the objective is to determine if the current levels of the factors being studied are close to the optimum or in some other region of the design space. This phase makes use of the first order model and the "method of steepest ascent". The generalized first order model is as follows:

$$\eta = \beta_0 + \beta_1 x_1 + \beta_2 x_2 + \cdots + \beta_k x_k$$

This is sometimes referred to as the "main-effects model" because only the main effects of the variables are revealed. The graphical plot for this is a plane in three-dimensional space.

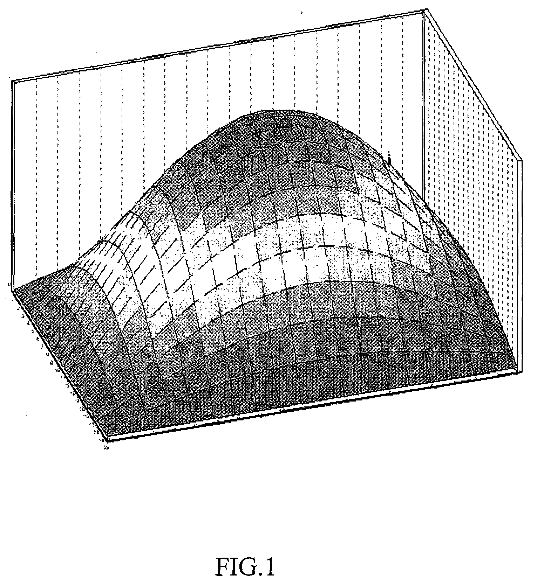

In "phase two" of the response surface experiment, a second order polynomial equation is used to fully model the curve of the response. The quadratic terms in these equations model the curvature in the true response function. If a maximum or minimum exists inside the factor region, this phase of RSM can find it. RSM designs are used for modeling a curved surface (quadratic) to continuous factors (see Fig. 1 for an exemplary response surface for two factors). Because three distinct values for each factor are necessary to fit a quadratic function, the standard two-level factorial designs cannot fit curved surfaces and thus cannot be used alone.

The generalized version of the second-order polynomial model is as follows:

$$\eta = \beta_0 + \sum_{j=1}^{k} \beta_j x_j + \sum_{j=1}^{k} \beta_{jj} x_j^2 + \sum_{i<j} \sum \beta_{ij} x_i x_j$$

The method of least squares is used to estimate the parameters (the β's) of the equations above.

At least some of the factors for RSM designs must be quantitative, continuous variables. The objective is to find a desirable location in the design space. This can be a maximum, a minimum, or an area where the response is stable over a range of the factors. Goals can include meeting a set of specifications for several responses simultaneously. The present invention provides the ability to target either precision, accuracy, or both as the response variables.

The "Central Composite Design" is a response surface design that is composed of a core, Resolution V, two-level factorial plus axial points and center points. It is widely used for fitting a second-order response surface. The factorial points can be divided in such a way that any blocked effect is eliminated before computation of the model. The first one or more blocks consist of the factorial design with some center points. The remaining block consists of the star points with additional center points.

The central composite designs are 2n factorial treatment designs with 2n additional treatment combinations called axial points along the coordinate axes of the coded factor levels. The coordinates for the axial points on the coded factor axes are (± a, 0, 0,..., 0), (0, ± a, 0,..., 0), (0, 0, 0,..., ± a). Generally, m replications are added to the center of the design at coordinate (0, 0,..., 0).

For either, or both, phase one and phase two, a central composite design is used to generate a set of liquid classes using different levels of the parameters to be studied. These liquid classes are then used to pipette a test volume using a liquid-handling instrument (robot) to randomized locations on a microplate or a precision balance. The raw experimental data from that pipetting is then gathered using the appropriate fluorescence or absorbance reader or through utilization of the balance. This data is then used to solve the first or second order equation depending on the phase of the experiment. The response surface can then be graphed using all of the factors under study (if three or less) or a user chosen subset.

After the precision for the liquid class at a specific volume has been determined, a range-finding experiment is used to determine the precision obtained at higher and low volumes. The design of this experiment is (by default) a one-dimensional central composite design, with volume as the varied parameter. The precision determined at each point may be used to define the volume limits outside of which the liquid class should not be used. If desired, limits between the actual experimentally determined points may be assigned based on solution of the second order equation and interpolation to estimate the volumes at which the precision remains adequate.

After the precision for the liquid class being tested has been optimized, an accuracy calibration experiment is used to determine the volume adjustment coefficient to resolve the accuracy of the volume to be pipetted. This coefficient is used in the liquid class to calculate an adjustment volume to combine with the requested volume to ensure accurate liquid delivery.

The accuracy calibration experiment is performed by selecting a user-defined number of volumes spread evenly within the volume range of the liquid class. For each of these volumes, eight (or a user-configured number) replications pipetted by the instrument (using the precision settings established in the previous screening and RSM experiments) are placed on a microplate. If a reader is being utilized for data collection, four (or user-configured number) hand-pipetted control volumes are also placed on the microplate. A reader blank control or controls is also necessary for the accuracy calibration.

Once the data for the experiment has been gathered using appropriate instrumentation, the differences between the average of the controls and the average of the instrument-pipetted replicates are calculated. These values are then used to solve a regression equation that produces the value for the coefficient to be used. The simple linear regression equation is of the form:

$$y = \beta x + \varepsilon$$

The final stage in creating or optimizing the liquid class is the verification experiment. This experiment is used to evaluate the effectiveness of both the accuracy and precision settings that were arrived at in the process of the screening, RSM and calibration experiments. The protocol for this experiment is as follows:

1. the liquid class parameters optimization software selects four evenly-spaced locations in the range of volumes under consideration;
2. for each of the four volumes chosen, the eight replicates pipetted using the robotic liquid-handler (and if appropriate the four hand-placed controls) are placed on a microplate or reader; and
3. the data from this pipetting is gathered using the appropriate instrumentation and the coefficient of variance is calculated for each of the four volumes.

The coefficient of variance (c.v.) is calculated by dividing the standard eviation by the mean as follows:

$$c.v. = \frac{s}{\bar{x}}.$$

The standard deviation (s) is calculated as follows:

$$s = \sqrt{\sum_i \frac{(x_i - \bar{x})^2}{n}}$$

The software provides a graphical user interface. This user interface permits the user to access, view and change parameters and methods of the liquid class optimization process as described above.

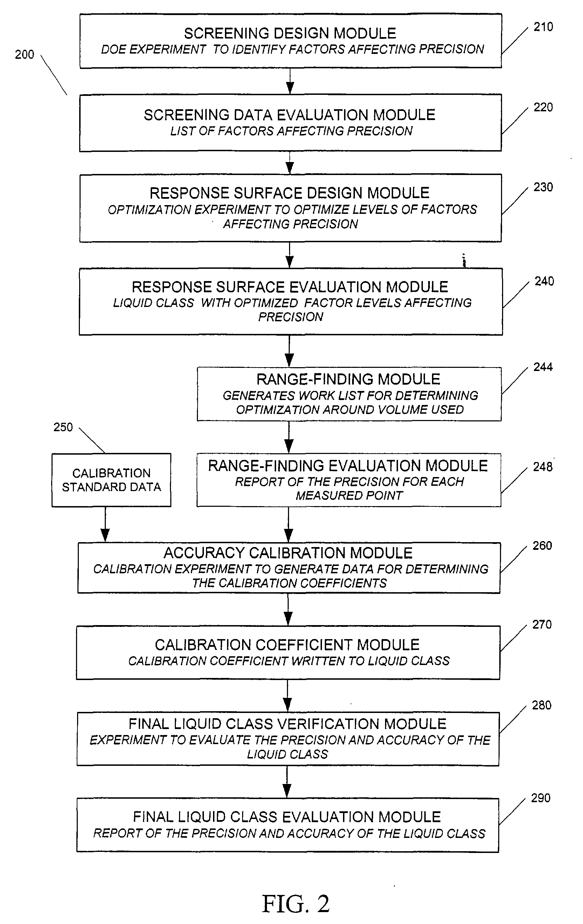

The software utilizes ten internal subsystems designed to aid in the development and evaluation of the liquid classes used by the pipetting control software. The outputs and relationship of these modules are illustrated in Fig. 2. The subsystems include the Factor Screening module 210, the Screening Data Evaluation module 220, the Response Surface Design module 230, the Response Surface Evaluation module 240, the Range-Finding Design Module 244, the Range-Finding Evaluation module, 248, the Accuracy Calibration module 260, the Calibration Coefficient module 270, the Final Liquid Class Verification module 280, and the Final Liquid Class Evaluation module 290. The features of each module are discussed in more detail below.

The Screening Design module 210 generates a pipetting control software package worklist (i.e., file containing pipetting commands) implementing a two-level factorial experiment. This experiment is designed to identify the factors that influence the pipetting precision of the liquid under study. The user enters a name for the liquid class experiment and input data concerning the physical configuration of the robot, including data on the exact type of tip. Not all data fields necessary to specify the intended configuration corresponding to a liquid class are included in that liquid class. For example, the exact type of tip and whether the tubing is low volume or not is data included in the liquid class data file. A facile fix for this omission is to include a comment field for each liquid class, with default text suggesting that these specifics be entered. The user selects whether the experiment should test either single pipetting (the default), or multi-pipetting. The configuration of the instrument used is automatically loaded from the configuration file of the active data directory of the software package.

The user is able to control the size of the experiment by varying the resolution of the factorial, and by eliminating any factor levels the user does not want to consider. The experiment designs supported by the Screening Design module are fractional factorials with the fractions ranging in size from ½ to 1/2048.

The user is presented with a list of all the liquid class parameters. The user then has the option to select the parameters to be used as experiment factors and to input the high and low levels of each factor selected. The parameters not selected as experiment factors are held constant throughout the experiment at the default values or at an inputted value. The default values for parameters are set when the user selects an existing liquid class on which to base the experiment. The user receives constant and immediate feedback on the size of the experiment in terms of the number of data points, microplates, and the estimated time to run the experiment. This data is adjusted as factors are selected and the resolution of the design is changed.

The Factor Screening module generates a standard script, worklist and liquid class data file. These files are designed to conduct a 2-level fractional factorial experiment including all pipetting and reader control. The worklist and script are designed for pipetting into microplates to be read by a spectrophotometer, followed by instructions for placing and reading the microplates that are generated. The worklist includes pipetting of a diluent to insure that the final volumes of all wells are equal and sufficient for photometric measurement. Alternatively, a precision balance may be used in place of a spectrophotometer. In this case the pipetting and data gathering sequence will be altered as appropriate to this type of instrumentation.

In the case of reader-based data gathering, to achieve full automation, the pipetting control software script can optionally include robotic manipulator arm (RoMa) vectors to allow movement of plates to and from the reader. If a RoMa device is not present on the instrument, the user is required to manually handle the process of reading each plate. The output data from the reader is converted into a standard output to be used by subsequent modules of the liquid-handling parameters opimization software. The information provided on the physical configuration, the level of the factorial, the factors which have been included and excluded, and the high and low levels of all factors are written to a text file for later use.

The Screening Data Evaluation module accepts as input the experiment design and result data from an experiment generated by the Screening Design module. The Screening Data Evaluation module calculates and reports the coefficient of variation (c.v., or standard error) for each data point (i.e., pipetting condition) employed in the experiment.

The CV's for all conditions tested are then analyzed using effects analysis to determine those factors that most influence the pipetting precision. The level of influence of the factors is presented graphically in a Pareto/Effects chart.

Optionally, the variation between tips is analyzed where possible, and a warning message is generated for tips that generate significantly different results from the mean. Optionally, the Screening Data Evaluation module can perform an analysis of the experimental data with two response variables being evaluated. This allows the software to evaluate factor combinations for both precision and accuracy in the case of little differentiation between factor combinations and precision. The outputs are written to a file suitable for input to subsequent modules of the liquid class parameter optimization software.

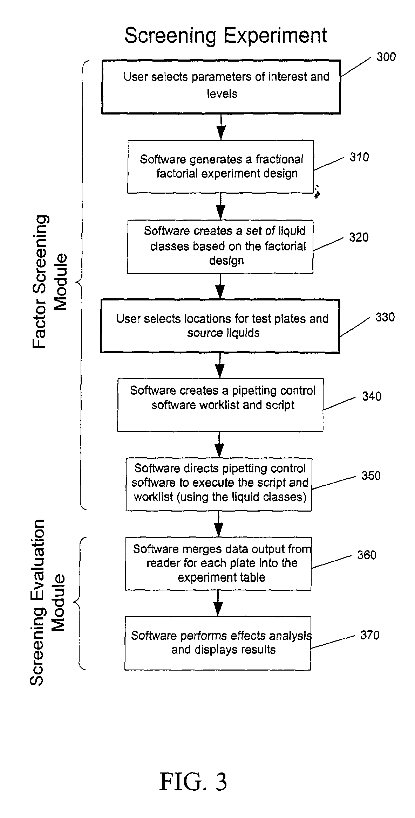

Fig. 3 illustrates the processing logic for conducting a screening experiment in accordance with the present invention. It covers steps performed by the Factor Screening module, as well as by the Screening Evaluation module. As part of the Factor Screening module, the user selects parameters of interest and the levels of the parameter as indicated in logic block 300. A fractional factorial experiment design is generated, as indicated in logic block 310. A set of liquid classes based on the factorial design is then created as indicated in logic block 320. Next, the user selects locations for test plates and source liquids as indicated in logic block 330. A worklist and script is then created as shown in logic block 340. The script and worklist are then executed using the liquid classes of the pipetting control software, as indicated in logic block 350. The data output from the reader for each plate is merged into the experiment table, as indicated in logic block 360. This logic block is the first step performed by the Screening Evaluation module. Effects analysis is then performed and the results are displayed as indicated in logic block 370.

The Response Surface Design module accepts inputs in two forms. First, output from the previous Screening Data Evaluation module is accepted. Second, a user interface allowing the user to arbitrarily select factors to optimize is also provided. Fields for the fixed values of the other options are provided; an option to load an existing liquid class as a template is included to allow rapid entry of the data.

The Response Surface Design module generates standard pipetting control software script, worklist and liquid class data files. These files are designed to conduct a response surface experiment using a central composite design to gather data to be used to optimize the levels of the factors found or that are believed to influence pipetting precision. The same considerations used in the Factor Screening module apply to this output. The output is in a standardized format suitable for further use by the Accuracy Calibration module.

The Response Surface Evaluation module accepts as input the design of, and data from, an experiment generated by the Response Surface Design module. An option for the Response Surface Evaluation module is provided to allow automated initiation by the pipetting control software once a pipetting experiment is complete. The Response Surface Evaluation module calculates and reports the coefficient of variation (CV or standard error) for each data point (i.e., pipetting condition) employed in the experiment. The CVs for all conditions tested are then analyzed to estimate the optimal level of each factor. This estimate is produced utilizing response surface methodology as described in section above.

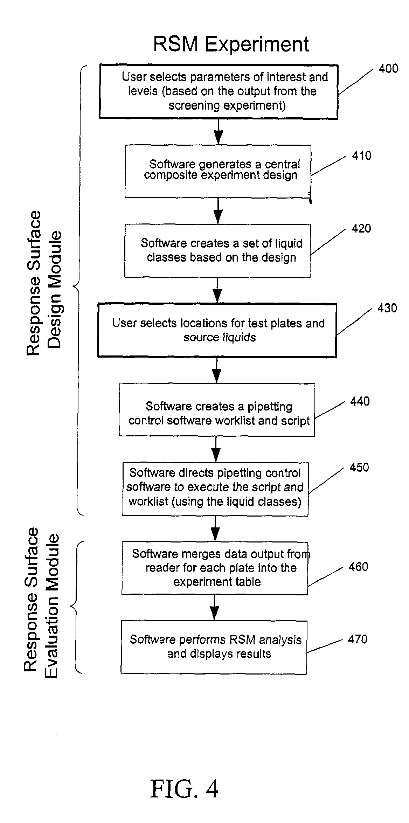

Fig. 4 illustrates the processing logic for an RSM experiment in accordance with the present invention. It contains steps related to the Response Surface Design module, as well as to the Response Surface Evaluation module. Processing starts in logic block 400 with the user selecting parameters of interest and levels based on the output from the screening experiment. A central composite experimental design is then generated as indicated in logic block 410. Next, a set of liquid classes based on the central composite experiment design is then created as indicated in logic block 420. At this point, the user selects locations for test plates and source liquids as indicated in logic block 430. A pipetting control software worklist and script is then created as indicated in logic block 440. The pipetting control software is directed to execute the script and worklist using the liquid classes as indicated in logic block 450. Next, in logic block 460, the data output from the reader or balance for each experiment is merged into the experiment table. This is the first step of the Response Surface Evaluation module. RSM analysis is then performed and the results displayed as indicated in logic block 470.

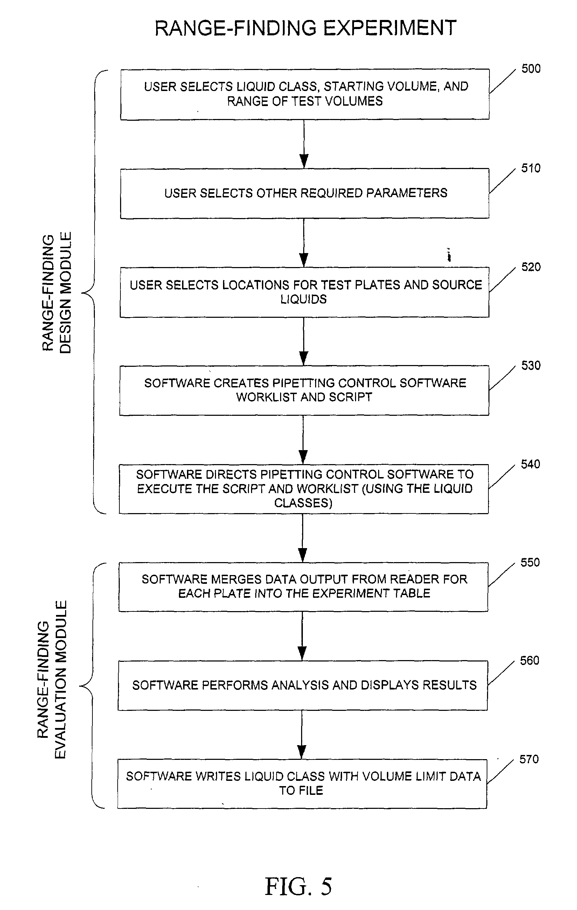

Fig. 5 illustrating the processing logic for a range-finding experiment in accordance with the present invention. It contains steps related to the Range-Finder Design module, as well as to the Range-Finding Evaluation module. Range-finding has two inputs. The first type is user-entered or default ranges for the pipetting to be tested. Five volumes are tested in one exemplary embodiment. The second type of input is the liquid class to be tested. This liquid class has a precision that has been optimized by the previous screening and response surface experiments. The user indicates which volume range to calibrate; the default range will be the range determined in the Range-Finding Evaluation module. The user will have the option to overwrite these defaults. The user has the option of determining the useful precise range of either single or multi-pipetting. The user enters the number of data points for each measurement. Constant and immediate feedback on the resulting number of data points, plates and estimated pipetting time are displayed to the user. The Range-Finding Design module generates a standard pipetting control software worklist designed to determine the useful range for a predefined acceptable precision for the liquid class under study. The same considerations used in the Factor Screening module apply to this output.

The Range-Finding Evaluation module accepts as input the parameters and data from the Range-Finding Design module directed experiment in a standard format, including a user-entered criterion for acceptable precision. The Range-Finding Evaluation module calculates and displays the precision calculated at each of the volumes examined. This module defines the volume limits of the liquid class based on comparison of the measured precision to this criterion. The user may manually override these volume limits.

As indicated above, Fig. 5 includes steps performed by the Range-Finding Design module, as well as the Range-Finding Evaluation module.

Processing begins with three user input steps. In logic block 500, the user selects the liquid class, starting volume, and range of test volumes to be used for the experiment. In logic block 510 the user inputs any other required parameters. The user then selects locations for the test plates and source liquids in logic block 520. A pipetting control software worklist and script is then created as indicated in logic block 530. Next, the pipetting control software is directed to execute the script and worklist using the liquid classes as indicated in logic block 540. The data output from the balance or from the reader for each plate is merged into the experiment table as indicated in logic block 550. The Range Finding Evaluation module then performs analysis and displays results as indicated in logic block 560. Finally, as indicated in logic block 570, the liquid class with volume limit data is written to a file.

The Accuracy Calibration module requires two types of input. The first type of input is the calibration data for the type of detection being used. This data can take the form of pre-measured extinction coefficient data or instructions for acquiring that data, e.g., from plates placed on the pipetting deck. The second type of input is the liquid class to be tested. This liquid class has a precision that has been optimized by the previous screening and response surface and range-finding experiments. The user indicates which volume range to calibrate.

The user has the option of calibrating the accuracy of either single or multi-pipetting. An option to overwrite the existing calibration coefficient for newly generated classes is provided; the default is to create a new liquid class based on the original. The user enters the number of data points for each measurement. Constant and immediate feedback on the resulting number of data points, plates and estimated pipetting time are displayed to the user. The Accuracy Calibration module generates a standard pipetting control software worklist designed to generate a calibration coefficient for the liquid class under study. The same considerations used in the Factor Screening module apply to this output.

The Calibration Coefficient module accepts as input the parameters and data from the Accuracy Calibration Module directed experiment in a standard format. The Calibration Coefficient module generates the calibration coefficient and the offset volume for the liquid class and volume range under study from the experimental data and input parameters from the Accuracy Calibration module. An assessment of the quality of the line representing the measured relationship is assigned (R-squared value) and this is displayed with the statistical summary of the data. The calibration information is saved to either the existing liquid class or to a new liquid class based on user input.

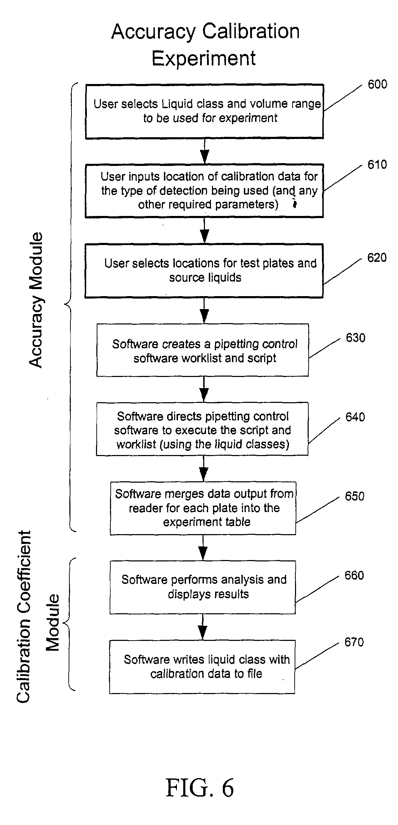

Fig. 6 illustrates the processing logic for the Accuracy Calibration experiment in accordance with the present invention. It includes steps performed by the Accuracy module, as well as the Calibration Coefficient module. Processing begins with three user input steps. In logic block 600, the user selects the liquid class and volume range to be used for the experiment. In logic block 610 the user inputs the location of calibration data for the type of detection being used, and any other required parameters. The user then selects locations for the test plates and source liquids in logic block 620. A pipetting control software worklist and script is then created as indicated in logic block 630. Next, the pipetting control software is directed to execute the script and worklist using the liquid classes as indicated in logic block 640. The data output from the balance or from the reader for each plate is merged into the experiment table as indicated in logic block 650. The Calibration Coefficient module then performs analysis and displays results as indicated in logic block 660. Finally, as indicated in logic block 670, the liquid class with calibration data is written to a file.

The Liquid Class Verification module takes as input an existing liquid class, whether or not developed with liquid-handling parameter optimization software. This can be a master liquid class containing multiple volume ranges. The user specifies all or some of these volume ranges to test, and whether single-pipetting, multi-pipetting, or both, should be tested.

The Liquid Class Verification module generates a pipetting control software worklist designed to test the precision and accuracy of a liquid class.

Since only a single set of conditions are tested, a large number of replicative samples are used as the default; other numbers can be specified at the user's discretion. The Liquid Class Verification module is capable of evaluating all volume ranges of a liquid class in both single and multi-pipetting modes in a single automated run.

The Final Liquid Class Evaluation module accepts as data the parameters from the Final Liquid Class Verification module and data from the resulting pipetting experiment. The Final Liquid Class Evaluation module evaluates the precision and accuracy of the liquid class on the basis of the experimental design and data provided from the Final Liquid Class Verification module. The precision and accuracy at all measured points are tabulated and presented graphically. Additionally, the data files resulting from the development of the liquid class are reformatted into a logical report summarizing the data and final parameters.

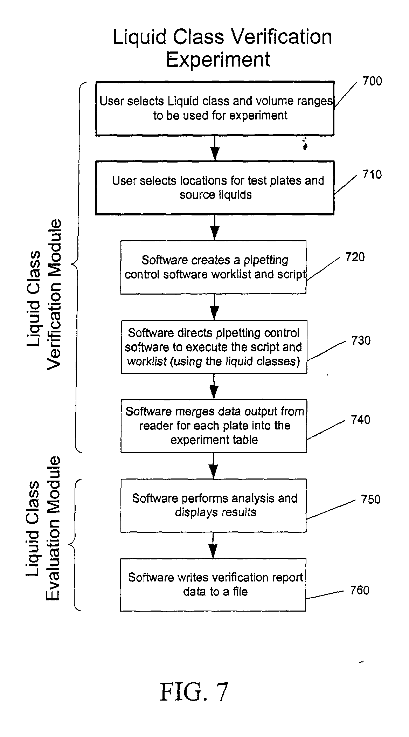

Fig. 7 illustrates the processing logic for the liquid class verification experiment in accordance with the present invention. It includes processing logic for the Liquid Class Verification module, as well as the Liquid Class Evaluation module. The first two steps are user input steps. In logic block 700, the user selects the liquid class and volume ranges to be used for the experiment. In logic block 710, the user selects locations for the test plates or balance and source liquids. The Liquid Class Verification Module creates a pipetting control software worklist and script as indicated in logic block 720. The Liquid Class Verification Module then directs the pipetting control software to execute the script and worklist using the liquid classes as indicated in logic block 730. The data output from the balance or from the reader for each plate is merged into the experiment table as indicated in logic block 740. The Liquid Class Evaluation module then performs analysis and displays results as indicated in logic block 750. The verification report data is written to a file as indicated in logic block 760.

The present invention can be realized in software or a combination of hardware and software. Any kind of computer system or other apparatus adapted for carrying out the methods described herein is suited. A typical combination of hardware and software could be a general purpose computer system with a computer program that, when loaded and executed, controls the computer system such that it carries out the methods described herein. The present invention can also be embedded in a computer program product, which includes all the features enabling the implementation of the methods described herein, and which, when loaded in a computer system, is able to carry out these methods.

Computer program instructions or computer program in the present context means any expression in any language, code or notation, or a set of instructions intended to cause a system having an information processing capability to perform a particular function, either directly or when either or both of the following occur: (a) conversion to another language, code or notation; (b) reproduction in a different material form.

Those skilled in the art will appreciate that many modifications to the exemplary embodiment of the present invention are possible without departing from the spirit and scope of the present invention. In addition, it is possible to use some of the features of the present invention without the corresponding use of the other features. Accordingly, the foregoing description of the exemplary embodiment is provided for the purpose of illustrating the principles of the present invention and not in limitation thereof since the scope of the present invention is defined solely by the appended claims.

**Claims**

1. An automated method for optimizing liquid-handling parameters for liquid-handling instruments comprising the steps of:

   • identifying a plurality of factors that determine a pipetting precision of a liquid class for a liquid under test; and
   • performing an optimization experiment to optimize the levels of identified factors determining the pipetting precision.

2. The automated method for optimizing liquid-handling parameters of claim 1 further comprising the step of generating a range-finding experiment to determine a volume range for the optimized pipetting parameters of the liquid class.

3. The automated method for optimizing liquid-handling parameters of claim 1 further comprising the steps of generating an accuracy calibration coefficient for the liquid class under test and verifying and evaluating the precision and accuracy of the liquid class under test.

4. The automated method for optimizing liquid-handling parameters of claim 1 wherein the liquid class includes a plurality of parameters for a pipetting control processing logic to define pipetting of a specific liquid.

5. The automated method for optimizing liquid-handling parameters of claim 1 wherein the precision of a liquid class is a measure of a variance among a plurality of pipetting replications with a given liquid, volume, and set of parameters.

6. The automated method for optimizing liquid-handling parameters of claim 3 wherein the accuracy of a liquid class under test is a measure of a variance between an amount of liquid that the liquid-handling instrument is instructed to pipette and a volume of liquid that is actually pipetted.

7. The automated method for optimizing liquid-handling parameters of claim 2 further comprising the steps of generating an accuracy calibration coefficient for the liquid class under test and verifying and evaluating the precision and accuracy of the liquid class under test.

8. The automated method for optimizing liquid-handling parameters of claim 1 wherein the step of identifying the plurality of factors determining precision includes the steps of:

   • automatically generating a screening experimental design based on user-selected parameters and levels to determine the plurality of factors that can be eliminated from any additional evaluation;
   • creating a set of liquid classes based on the screening experiment design;
   • directing a pipetting control processing logic to execute a plurality of pipetting commands corresponding to the liquid classes; and
   • performing an effects analysis to determine the plurality of factors determining pipetting precision.

9. The automated method for optimizing liquid-handling parameters of claim 1 wherein the step of optimizing the levels of identified factors determining pipetting precision includes the steps of:

   • automatically generating a response surface experimental design based on the identified factors;
   • creating a set of liquid classes based on the response surface experimental design;
   • directing a pipetting control processing logic to execute a plurality of pipetting commands corresponding to the set of liquid classes; and

- performing a response surface methodology analysis to determine the optimized level of factors determining precision.

**10.** The automated method for optimizing liquid-handling parameters of claim 9 wherein the step of performing a response surface methodology analysis includes calculating a coefficent of variation for each pipetting condition in a response surface methodology experiment and analyzing the coefficent of variation for each pipetting condition to estimate an optimal level for each factor.

**11.** The automated method for optimizing liquid-handling parameters of claim 1 further comprising the step of determining a calibration coefficient and an adjustment volume for the liquid class under test.

**12.** The automated method for optimizing liquid-handling parameters of claim 3 wherein the step of verifying and evaluating the precision and accuracy of the liquid class under test comprises the steps of:

- evaluating all volume ranges specified for a liquid class in a single automated run;
- generating the set of final liquid class parameters; and
- tabulating and graphically presenting the precision and accuracy at all measured data points.

**13.** The automated method for optimizing liquid-handling parameters of claim 2 wherein the step of generating a range-finding experiment comprises determining the volume range meeting pre-specified precision requirements for the liquid class under test.

**14.** A system for optimizing parameters for liquid-handling, comprising:

- a liquid-handling instrument that delivers a specified volume of a liquid;
- a pipetting control processing logic operating on a processor device that directs the actions of the liquid-handling instrument; and
- a liquid-handling parameters optimization processing logic operating on the processor device, and cooperative with the pipetting control processing logic that automatically optimizes liquid-handling parameters.

**15.** The system for optimizing parameters for liquid-handling of claim 14, wherein the liquid handling parameters optimization processing logic comprises:

- a screening design module that identifies a plurality of factors affecting the pipetting precision of a liquid class;
- a data evaluation module that generates a list of factors affecting precision;
- a response surface design module that collects data for use in optimizing the levels of factors affecting pipetting precision; and
- a response surface evaluation module that determines an optimal level for each factor based on a computed standard error for each pipetting condition used in a test.

**16.** The system for optimizing parameters for liquid-handling of claim 14, wherein the liquid handling parameters optimization processing logic further comprises:

- a range-finding design module that collects data for use in determining a plurality of limits of precise pipetting for a liquid class optimized at a particular volume; and
- a range-finding evaluation module that determines a plurality of volume limits of a liquid class based on user-defined criteria.

**17.** The system for optimizing parameters for liquid-handling of claim 14, wherein the liquid handling parameters optimization processing logic further comprises:

- an accuracy calibration module that generates data for determining a calibration coefficient for a liquid class; and
- a calibration coefficient module that generates the calibration coefficient and an offset volume for the liquid class and selected volume ranges.

**18.** The system for optimizing parameters for liquid-handling of claim 14 wherein the liquid handling parameters optimization processing logic further comprises:

- a liquid class verification module that generates data for determining the precision and accuracy of a liquid class; and
- a liquid class evaluation module that tabulates and presents the precision and accuracy of the liquid class.

19. The system for optimizing parameters for liquid-handling of claim 16 wherein the liquid handling parameters optimization processing logic further comprises:

- an accuracy calibration module that generates data for determining a calibration coefficient for a liquid class;
- a calibration coefficient module that generates the calibration coefficient and an offset volume for the liquid class and selected volume ranges;
- a liquid class verification module that generates data for determining the precision and accuracy of a liquid class; and
- a liquid class evaluation module that tabulates and presents the precision and accuracy of the liquid class.

20. A computer readable medium containing a computer program product for optimizing liquid-handling parameters for liquid-handling instruments, the computer program product comprising:

- program instructions that identify a plurality of factors that determine a pipetting precision of a liquid class for a liquid under test; and
- program instructions that perform an optimization experiment to optimize the levels of identified factors determining the pipetting precision.

21. The computer program product for optimizing liquid-handling parameters of claim 20 further comprising program instructions that generate a range-finding experiment to determine a volume range for the optimized pipetting parameters of the liquid class.

22. The computer program product for optimizing liquid-handling parameters of claim 20 further comprising program instructions that generate an accuracy calibration coefficient for the liquid class under test and verify and evaluate the precision and accuracy of the liquid class under test.

23. The computer program product for optimizing liquid-handling parameters of claim 20 wherein the liquid class includes a plurality of parameters for a pipetting control processing logic to define pipetting of a specific liquid.

24. The computer program product for optimizing liquid-handling parameters of claim 20 wherein the precision of a liquid class is a measure of a variance among a plurality of pipetting replications with a given liquid, volume, and set of parameters.

25. The computer program product for optimizing liquid-handling parameters of claim 22 wherein the accuracy of a liquid class under test is a measure of a variance between an amount of liquid that the liquid-handling instrument is instructed to pipette and a volume of liquid that is actually pipetted.

26. The computer program product for optimizing liquid-handling parameters of claim 21 further comprising program instructions that generate an accuracy calibration coefficient for the liquid class under test and verify and evaluate the precision and accuracy of the liquid class under test.

27. The computer program product for optimizing liquid-handling parameters of claim 20 wherein the program instructions that identify the plurality of factors determining precision comprise:

- program instructions that automatically generate a screening experimental design based on user-selected parameters and levels to determine the plurality of factors that can be eliminated from any additional evaluation;
- program instructions that create a set of liquid classes based on the screening experiment design;
- program instructions that direct a pipetting control processing logic to execute a plurality of pipetting commands corresponding to the liquid classes; and
- program instructions that perform an effects analysis to determine the plurality of factors determining pipetting precision.

28. The computer program product for optimizing liquid-handling parameters of claim 20 wherein the program instructions that optimize the levels of identified factors determining pipetting precision comprise:

- program instructions that automatically generate a response surface experimental design based on the identified factors;
- program instructions that create a set of liquid classes based on the response surface experimental design;
- program instructions that direct a pipetting control processing logic to execute a plurality of pipetting commands corresponding to the set of liquid classes; and
- program instructions that perform a response surface methodology analysis to determine the optimized level of factors determining precision.

29. The computer program product for optimizing liquid-handling parameters of claim 28 wherein the program instructions that perform a response surface methodology analysis include program instructions that calculate a coefficent of variation for each pipetting condition in a response surface methodology experiment and analyze the coefficent of variation for each pipetting condition to estimate an optimal level for each factor.

30. The computer program products for optimizing liquid-handling parameters of claim 20 further comprising program instructions that determine a calibration coefficient and an adjustment volume for the liquid class under test.

31. The computer program product for optimizing liquid-handling parameters of claim 22 wherein the program instructions that verify and evaluate the precision and accuracy of the liquid class under test comprise:

- program instructions that evaluate all volume ranges specified for a liquid class in a single automated run;
- program instructions that generate the set of final liquid class parameters; and
- program instructions that tabulate and graphically present the precision and accuracy at all measured data points.

32. The computer program product for optimizing liquid-handling parameters of claim 21 wherein the program instructions that generate a range-finding experiment comprise program instructions that determine the volume range meeting pre-specified precision requirements for the liquid class under test.

FIG.1

SCREENING DESIGN MODULE
*DOE EXPERIMENT TO IDENTIFY FACTORS AFFECTING PRECISION* / 210

200

SCREENING DATA EVALUATION MODULE
*LIST OF FACTORS AFFECTING PRECISION* / 220

RESPONSE SURFACE DESIGN MODULE
*OPTIMIZATION EXPERIMENT TO OPTIMIZE LEVELS OF FACTORS AFFECTING PRECISION* / 230

RESPONSE SURFACE EVALUATION MODULE
*LIQUID CLASS WITH OPTIMIZED FACTOR LEVELS AFFECTING PRECISION* / 240

RANGE-FINDING MODULE
*GENERATES WORK LIST FOR DETERMINING OPTIMIZATION AROUND VOLUME USED* / 244

250

CALIBRATION STANDARD DATA

RANGE-FINDING EVALUATION MODULE
*REPORT OF THE PRECISION FOR EACH MEASURED POINT* / 248

ACCURACY CALIBRATION MODULE
*CALIBRATION EXPERIMENT TO GENERATE DATA FOR DETERMINING THE CALIBRATION COEFFICIENTS* / 260

CALIBRATION COEFFICIENT MODULE
*CALIBRATION COEFFICIENT WRITTEN TO LIQUID CLASS* / 270

FINAL LIQUID CLASS VERIFICATION MODULE
*EXPERIMENT TO EVALUATE THE PRECISION AND ACCURACY OF THE LIQUID CLASS* / 280

FINAL LIQUID CLASS EVALUATION MODULE
*REPORT OF THE PRECISION AND ACCURACY OF THE LIQUID CLASS* / 290

FIG. 2

## Screening Experiment

User selects parameters of interest and levels — 300

Software generates a fractional factorial experiment design — 310

Software creates a set of liquid classes based on the factorial design — 320

User selects locations for test plates and source liquids — 330

Software creates a pipetting control software worklist and script — 340

Software directs pipetting control software to execute the script and worklist (using the liquid classes) — 350

Software merges data output from reader for each plate into the experiment table — 360

Software performs effects analysis and displays results — 370

Factor Screening Module

Screening Evaluation Module

FIG. 3

## RSM Experiment

User selects parameters of interest and levels (based on the output from the screening experiment) — 400

↓

Software generates a central composite experiment design — 410

↓

Software creates a set of liquid classes based on the design — 420

↓

User selects locations for test plates and source liquids — 430

↓

Software creates a pipetting control software worklist and script — 440

↓

Software directs pipetting control software to execute the script and worklist (using the liquid classes) — 450

↓

Software merges data output from reader for each plate into the experiment table — 460

↓

Software performs RSM analysis and displays results — 470

*Response Surface Design Module*

*Response Surface Evaluation Module*

FIG. 4

# RANGE-FINDING EXPERIMENT

RANGE-FINDING
DESIGN MODULE

USER SELECTS LIQUID CLASS, STARTING VOLUME, AND RANGE OF TEST VOLUMES — 500

USER SELECTS OTHER REQUIRED PARAMETERS — 510

USER SELECTS LOCATIONS FOR TEST PLATES AND SOURCE LIQUIDS — 520

SOFTWARE CREATES PIPETTING CONTROL SOFTWARE WORKLIST AND SCRIPT — 530

SOFTWARE DIRECTS PIPETTING CONTROL SOFTWARE TO EXECUTE THE SCRIPT AND WORKLIST (USING THE LIQUID CLASSES) — 540

RANGE-FINDING
EVALUATION MODULE

SOFTWARE MERGES DATA OUTPUT FROM READER FOR EACH PLATE INTO THE EXPERIMENT TABLE — 550

SOFTWARE PERFORMS ANALYSIS AND DISPLAYS RESULTS — 560

SOFTWARE WRITES LIQUID CLASS WITH VOLUME LIMIT DATA TO FILE — 570

FIG. 5

# Accuracy Calibration
# Experiment

```
                    ┌─────────────────────────────┐
                    │ User selects Liquid class and │  ╱ 600
                    │  volume range to be used for  │
                    │         experiment            │
                    └──────────────┬──────────────┘
                                   │
                                   ▼
                    ┌─────────────────────────────┐
                    │ User inputs location of       │  ╱ 610
                    │ calibration data for the type │
                    │ of detection being used (and  │
                    │ any other required parameters)│
                    └──────────────┬──────────────┘
                                   │
                                   ▼
                    ┌─────────────────────────────┐
                    │ User selects locations for    │  ╱ 620
                    │   test plates and source      │
                    │         liquids               │
                    └──────────────┬──────────────┘
                                   │
                                   ▼
                    ┌─────────────────────────────┐
                    │ Software creates a pipetting   │  ╱ 630
                    │  control software worklist     │
                    │       and script              │
                    └──────────────┬──────────────┘
                                   │
                                   ▼
                    ┌─────────────────────────────┐
                    │ Software directs pipetting     │  ╱ 640
                    │ control software to execute    │
                    │ the script and worklist (using │
                    │     the liquid classes)       │
                    └──────────────┬──────────────┘
                                   │
                                   ▼
                    ┌─────────────────────────────┐
                    │ Software merges data output    │  ╱ 650
                    │ from reader for each plate into│
                    │     the experiment table      │
                    └──────────────┬──────────────┘
                                   │
                                   ▼
                    ┌─────────────────────────────┐
                    │ Software performs analysis     │  ╱ 660
                    │     and displays results       │
                    └──────────────┬──────────────┘
                                   │
                                   ▼
                    ┌─────────────────────────────┐
                    │ Software writes liquid class   │  ╱ 670
                    │  with calibration data to file │
                    └─────────────────────────────┘
```

Accuracy Module (steps 600–650)

Calibration Coefficient Module (steps 660–670)

# FIG. 6

## Liquid Class Verification Experiment

**Liquid Class Verification Module**

User selects Liquid class and volume ranges to be used for experiment — 700

User selects locations for test plates and source liquids — 710

Software creates a pipetting control software worklist and script — 720

Software directs pipetting control software to execute the script and worklist (using the liquid classes) — 730

Software merges data output from reader for each plate into the experiment table — 740

**Liquid Class Evaluation Module**

Software performs analysis and displays results — 750

Software writes verification report data to a file — 760

FIG. 7